# EUROPÄISCHE PATENTSCHRIFT

(11) **EP 4 165 986 B1**
(45) Veröffentlichungstag und Bekanntmachung des Hinweises auf die Patenterteilung: **17.07.2024**
(21) Anmeldenummer: 22200071.3
(22) Anmeldetag: 06.10.2022
(51) Int. Cl.: A01K 97/08, B25B 5/10

(54) **MONTAGEKLAMMER ZUM TRANSPORT VON ANGELRUTEN**
MOUNTING BRACKET FOR TRANSPORTING FISHING RODS
PINCE DE MONTAGE POUR TRANSPORTER DES CANNES À PÊCHE

(30) Priorität: 15.10.2021 DE 102021005155
(43) Veröffentlichungstag der Anmeldung: 19.04.2023
(73) Patentinhaber: Schwenk, Marco, 88250 Weingarten (DE)
(72) Erfinder: Schwenk, Marco, 88250 Weingarten (DE)
(74) Vertreter: Feuerstein, Matthias

(56) Entgegenhaltungen:
- US-A- 3 832 796
- US-A- 5 815 894
- US-B1- 6 584 725

## Beschreibung

Die Erfindung betrifft eine Montageklammer zum Transport von Angelruten.

Angelruten werden zumeist als Teleskoprute oder als Steckrute ausgeführt. Bei Teleskopruten kann die Rute ineinandergeschoben werden. Zum Angeln wird die Rute auseinandergezogen und kann danach zu einem kompakten Paket ineinandergeschoben werden, so dass sie leicht zu transportieren ist. Diesem Vorteil bei Aufbau und Transport stehen jedoch einige Nachteile bei der Pflege und hinsichtlich der Belastbarkeit gegenüber, so dass häufig Steckruten verwendet werden. Die Steckrute besteht aus zwei oder mehr Angelrutenstücken. Zum Angeln werden die einzelnen Angelrutenstücke zu einer Rute zusammengesteckt und zum Transport zerlegt verpackt. Für den Transport wird die Angelschnur samt Köder meist montiert an der Angelrute belassen, wodurch die einzelnen Rutenelemente weiterhin miteinander verbunden bleiben.

Problematisch bei Steckruten ist, dass sich beim Transport die zerlegten Angelrutenstücke nicht berühren sollten, denn durch daraus resultierende Schläge, Stöße oder Reibung können Kratzer, Knickungen und sonstigen Beschädigungen entstehen.

Ein weiteres Problem, das während des Transports entsteht, ist das Sichern des Hakens. Der Haken ist typischerweise sehr spitz und mit einem Widerhaken ausgeführt, so dass es leicht zu Verletzungen oder Beschädigung an anderen Gegenständen kommen kann, wenn er nicht entsprechend gesichert ist. Das Sichern sollte hierbei nicht nur ein schlichtes Befestigen umfassen, so dass der Haken nicht unkontrolliert umherpendeln kann, sondern auch einen Schutz der Hakenspitze selbst bieten.

Bekannt sind bspw. Klettbänder, mit denen die einzelnen Angelrutenstücke fest miteinander verschnürt werden. Hierbei kommt es unweigerlich zum ungewollten Kontakt der empfindlichen Einzelelemente oder des Griffstücks, so dass entsprechende Beschädigungen auftreten können. Außerdem wird das Anbringen der Klettbänder als vergleichsweise umständlich empfunden und ein Schutz vor dem spitzen Haken ist damit auch nicht zwingend gewährleistet.

Aus der US 3,113,363 ist eine Klemmvorrichtung bekannt, die mehrere voneinander beabstandete Aussparungen für die Aufnahme der einzelnen Angelrutenstücke aufweist. Zum Transport werden wenigstens zwei dieser Klemmvorrichtungen benötigt. Die einzelnen Angelrutenstücke werden dann in diese Aussparungen eingeklemmt und kommen aufgrund der Beabstandung nicht mehr in gegenseitige Berührung. Nachteilig ist hierbei jedoch der vergleichsweise unhandliche Zusammenbau der einzelnen Angelrutenstücke mit der Klemmvorrichtung und entsprechend auch die Demontage. Häufig muss die Angelrute nämlich auch dann transportiert werden, wenn lediglich der Platz gewechselt werden soll. Insbesondere in solchen Situationen besteht ein Bedarf, ohne viel Aufwand alle Einzelteile der Rute schnell transportfähig zu machen und dabei auch den Haken so sichern zu können, dass es durch ihn zu keinen Verletzungen und Beschädigungen kommen kann.

Des Weiteren ist aus der US 5815894 A eine Klemmvorrichtung bekannt, mit der einzelne Angelrutenstücke voneinander beabstandet befestigt werden können. Die Klemmvorrichtung ist allerdings auf ein festes Verhältnis der Angelrutenstücke zueinander festgelegt. Dieses Verhältnis ist jedoch sehr selten gleich und somit nachteilig im Gebrauch. Ebenso steht der typischerweise konische Verlauf der Angelruten in keinem Verhältnis zueinander.

Die Aufgabe der Erfindung besteht somit darin, die einzelnen Angelrutenstücken einerseits so transportieren zu können, dass sie sich nicht berühren und damit gegenseitig beschädigen können, und gleichzeitig einfach, sicher, schnell und komfortabel zusammengepackt werden können.

Die Aufgabe wird erfindungsgemäß gelöst durch eine Montageklammer mit den Merkmalen des Anspruchs 1. Vorteilhafte Ausgestaltungen der Erfindung sind in den Unteransprüchen angegeben.

Erfindungsgemäß besteht die Montageklammer aus einem Grundkörper und zwei Schenkeln, die jeweils einen Klemmabschnitt und einen Griffabschnitt aufweisen. Die beiden Schenkel sind gegenüberliegend über wenigstens ein Gelenk, vorteilhafterweise über jeweils ein Gelenk, mit dem Grundkörper verbunden, und zwar derart, dass die Klemmabschnitte der Schenkel zumindest teilweise an den Seitenflächen des Grundkörpers anliegen und die Griffabschnitte über den Grundkörper hinausragend jeweils einen Hebelarm bilden. Bevorzugt ist das Gelenk zwischen dem Klemmabschnitt und dem Griffabschnitt angeordnet.

Zwischen den beiden Schenkeln ist eine Feder angeordnet, die vorzugsweise als Schenkelfeder ausgebildet ist und die Schenkel so vorspannt, dass die beiden Klemmabschnitte aufeinander zugerichtet gegen den Grundkörper gepresst werden.

Die Schenkel sind im Klemmabschnitt zumindest teilweise derart konvex nach außen gewölbt, dass sich in diesem Bereich jeweils zwischen den Innenseiten der Schenkel und den Seitenflächen des Grundkörpers ein Freiraum zur Aufnahme jeweils eines Teilstücks einer Angelrute ausbildet. Die beiden Freiräume sind dabei durch den Grundkörper voneinander definiert beabstandet.

Der erste Vorteil der Erfindung besteht darin, zu Transportzwecken zwei Angelrutenstücke einer Steckrute durch den Klammermechanismus auf einfache, schnelle und komfortable Weise kompakt miteinander verbinden zu können. Mit einer Hand hält man die einzelnen Angelrutenstücke, mit der anderen Hand öffnet man die Montageklammern an den Hebelarmen des Griffabschnitts, führt die Angelrutenstücke jeweils in die durch die geöffnete Klammer zugänglichen Freiräume und schließt dann die Montageklammer wieder, so dass die zwei Angelrutenstücke parallel nebeneinander angeordnet und durch die Montageklammer fest miteinander verbunden sind. Es bietet sich die Verwendung von zwei Montageklammern an, die vorteilhafterweise jeweils in den Endbereichen der Angelrutenstücke angebracht werden. Wenn mehrere Angelrutenstücke miteinander verbunden werden sollen, lässt sich das durch weitere Montageklammern auf einfache Weise realisieren.

Der zweite Vorteil der Erfindung besteht darin, dass die Freiräume und damit im montierten Zustand die Angelrutenstücke durch den Grundkörper räumlich voneinander getrennt sind. Der Grundkörper wirkt folglich nicht nur als Basiselement für die Schenkel, sondern gleichzeitig auch als Abstandshalter, der verhindert, dass sich die beiden Angelrutenstücke berühren und in Folge dessen aneinander reiben oder unvorteilhaft verbogen bzw. verformt werden können.

Der dritte Vorteil ist darin zu sehen, dass die beiden Freiräume der Montageklammer völlig unabhängig voneinander genutzt werden können. Weder hat das Vorhandensein eines Angelrutenstücks in einem der Freiräume einen Einfluss auf den jeweils anderen Freiraum, noch beeinflusst der Durchmesser eines Angelrutenstücks die Klemmwirkung eines in dem entsprechend anderen Freiraum angeordneten Angelrutenstücks.

In einer vorteilhaften Weiterbildung sind die Seitenflächen des Grundkörpers konkav gewölbt, um die Fixierung der Angelrutenstücke in dem Freiraum zu optimieren.

In einer vorteilhaften Weiterbildung weisen die konvexen Wölbungen der Klemmabschnitte beider Schenkel unterschiedliche Radien auf, so dass sich unterschiedlich große Freiräume ausbilden. Aufgrund des sich verjüngenden Verlaufs der Angelrute weisen die einzelnen Angelrutenstücke eine unterschiedliche Dicke auf, so dass durch unterschiedlich große Freiräume eine optimale Fixierung der Angelrutenstücke gewährleistet ist.

In einer vorteilhaften Weiterbildung ist die Feder als Schenkelfeder ausgebildet. Die Schenkel der Feder liegen dabei jeweils an der Innenseite des Griffabschnitts der beiden Montageklammerschenkel an. Vorteilhafterweise liegen die Schenkel der Feder nicht nur an den Innenseiten des Griffabschnitts an, sondern die distalen Enden der Federschenkel sind in eine Ausnehmung eingeführt. Hierfür weist das Ende des Griffabschnitts eine Verdickung auf. Durch dieses Einführen in die Ausnehmung wird die Feder zum einen an einem seitlichen Verrutschen gehindert. Zum anderen ist die Feder an einer Bewegung in Richtung des Griffabschnitts gehindert und kann sich folglich beim Zusammendrücken der Hebelarme des Griffabschnitts nur in Richtung des Klemmabschnitts bewegen.

In einer vorteilhaften Weiterbildung weist der Grundkörper eine Durchgangsbohrung und/oder eine Öse auf, die jeweils zum Einführen eines Angelhakens und/oder eines Karabiners, auch Snap genannt, und/oder eines Angelköders geeignet ist bzw. sind. Dadurch kann die Angelschnur mit oder ohne Köder fixiert und ein unkontrolliertes Umherpendeln vermieden werden. Während es sich anbietet, den spitzen Angelhaken in die Durchgangsbohrung einzuführen, da dieser dann vollständig verdeckt ist und dadurch Verletzungen und Beschädigungen verhindert werden können, ist die Fixierung des Karabiners oder des Angelköders an der Öse vorteilhaft.

In einer vorteilhaften Weiterbildung ist die Montageklammer im Spritzguss- oder 3D-Druck-Verfahren hergestellt. Die Herstellung ist somit vergleichsweise einfach und kostengünstig möglich.

In einer besonders vorteilhaften Weiterbildung überlappen sich die Enden der Schenkel im geschlossenen und unbenutzten Zustand der Montageklammer. Dadurch können sich die Schenkel weiter schließen, wodurch der Freiraum im kleiner werden kann und somit auch Angelrutenstücke mit kleinem Durchmesser aufgenommen und verklemmt werden können.

Nachfolgend wird die Erfindung anhand von Ausführungsbeispielen unter Bezugnahme auf die Zeichnungen näher erläutert.

Es zeigen schematisch:
- Figur 1: eine Seitenansicht der erfindungsgemäßen Montageklammer in geschlossenem Zustand,
- Figur 2: eine perspektivische Ansicht der erfindungsgemäßen Montageklammer in geschlossenem Zustand,
- Figur 3: eine Seitenansicht der erfindungsgemäßen Montageklammer in geöffnetem Zustand,
- Figur 4: eine perspektivische Ansicht der erfindungsgemäßen Montageklammer in geöffnetem Zustand,
- Figur 5: eine Seitenansicht einer zweiten Ausführungsform der erfindungsgemäßen Montageklammer in geschlossenem Zustand,
- Figur 6: eine perspektivische Ansicht einer zweiten Ausführungsform der erfindungsgemäßen Montageklammer in geschlossenem Zustand und
- Figur 7: eine transportfähige Angelrute mit zwei erfindungsgemäßen Montageklammern.

Bei der nachfolgenden Beschreibung der bevorzugten Ausführungsformen bezeichnen gleiche Bezugszeichen gleiche oder vergleichbare Komponenten.

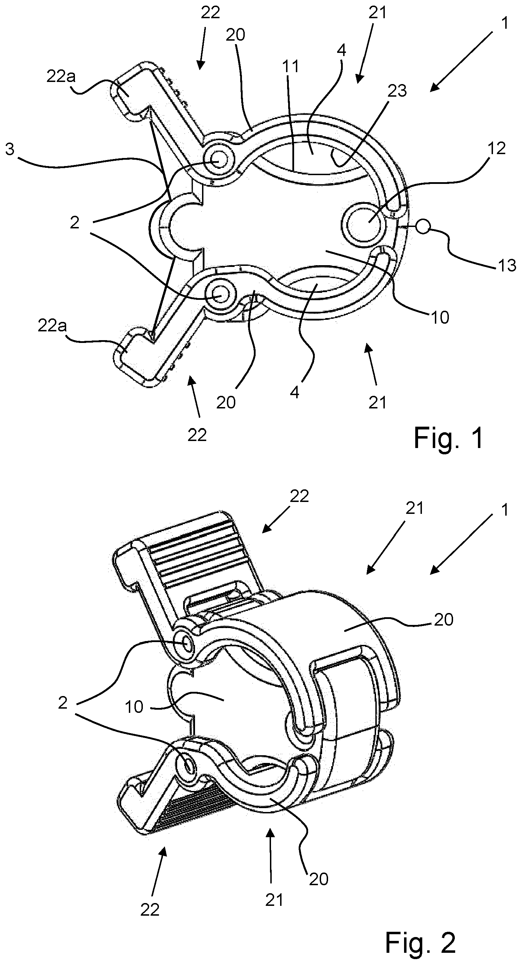

In Figur 1 ist die erfindungsgemäße Montageklammer 1 in Seitenansicht gezeigt und in Figur 2 in perspektivischer Ansicht, wobei die Montageklammer 1 jeweils im geschlossenen Zustand abgebildet ist. Die Montageklammer 1 besteht im Wesentlichen aus einem Grundkörper 10 und zwei Schenkeln 20. Die Schenkel 20 sind dabei jeweils in einen Klemmabschnitt 21 und einen Griffabschnitt 22 unterteilt.

Im Bereich des Übergangs zwischen Klemmabschnitt 21 und Griffabschnitt 22 befindet sich jeweils ein Gelenk 2, über das die beiden Schenkel 20 gegenüberliegend jeweils verdrehbar mit dem Grundkörper 10 verbunden sind. Die Klemmabschnitte 21 der Schenkel 20 liegen in geschlossenem Zustand zumindest teilweise an den Seitenflächen 11 des Grundkörpers 10 an, wie bspw. aus Fig. 2 ersichtlich, wodurch ein Anschlag gebildet wird. Die Griffabschnitte 22 ragen jeweils über den Grundkörper 10 hinaus und bilden einen Hebelarm. Zwischen den beiden Schenkeln 20 ist eine Schenkelfeder 3 angeordnet, die die Schenkel 20 so vorspannt, dass die beiden Klemmabschnitte 21 aufeinander zugerichtet gegen den Grundkörper 10 gepresst werden. Der erwähnte Anschlag begrenzt die Beweglichkeit der Schenkel 20 in geschlossenem Zustand.

Die Schenkel der Feder 3 liegen dabei jeweils an der Innenseite des Griffabschnitts 22 der beiden Montageklammerschenkel 20 an. Vorteilhafterweise liegen die Schenkel der Feder 3 nicht nur an den Innenseiten des Griffabschnitts 22 an, sondern die distalen Enden der Federschenkel sind in eine Ausnehmung eingeführt (nicht dargestellt). Hierfür weist das Ende des Griffabschnitts 22 eine Verdickung 22a auf.

Indem man die Montageklammer 1 an den Hebelarmen des Griffabschnitts 22 vorzugsweise zwischen Daumen und Zeigefinger nimmt und gegen die Federkraft zusammendrückt, lässt sich die Montageklammer 1 einhändig auf einfache Weise öffnen und dann wieder schließen.

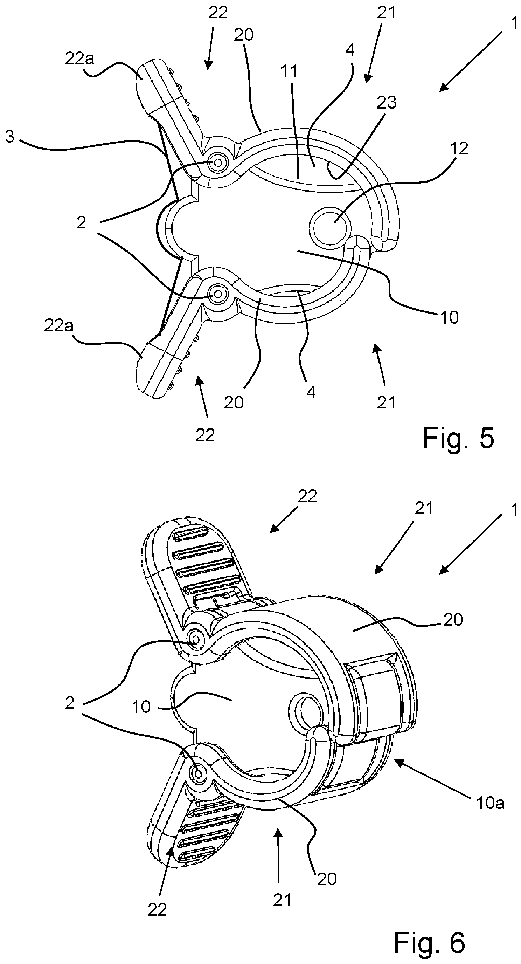

Wie aus den Figuren ersichtlich sind die Schenkel 20 im Klemmabschnitt 21 konvex nach außen gewölbt, während die Seitenflächen 11 des Grundkörpers 10 konkav gewölbt sind, so dass sich in diesem Bereich jeweils zwischen den Innenseiten 23 der Schenkel 20 und den Seitenflächen 11 des Grundkörpers 10 ein Freiraum 4 ausbildet. In diesen Freiraum 4 wird im Anwendungsfall ein Teilstück einer auseinandergebauten Angelrute 30 eingeklemmt. Im montierten Zustand, wie er in Figur 5 dargestellt ist, ist die Montageklammer 1 somit orthogonal zur Längsrichtung der Angelrutenteilstücke 30a, 30b ausgerichtet. Dabei sollte der Durchmesser des Angelrutenteilstücks 30a, 30b größer sein als der Abstand zwischen den Seitenflächen 11, 23 von Grundkörper 10 und Schenkel 20, um eine entsprechende Klemmwirkung zu erzielen. Da die Angelrute 30 typischerweise einen konischen Verlauf hat und damit der Durchmesser der Angelrute 30 vom Griffstück bis zur Spitze allmählich kleiner wird, sind die beiden Freiräume 4 der Montageklammer 1 vorteilhafterweise unterschiedlich groß ausgeführt, indem die konvexe bzw. konkave Wölbung des Klemmabschnitts 21 bzw. des Grundkörpers 10 auf beiden Seiten unterschiedlich ausfällt.

Das entscheidende Merkmal der Montageklammer 1 ist, dass die beiden Freiräume 4 durch den Grundkörper voneinander definiert beabstandet sind. Wenn im Anwendungsfall (siehe Fig. 5) in jedem Freiraum 4 ein Angelrutenteilstück 30a, 30b eingeklemmt wurde, wird durch diese räumliche Beabstandung verhindert, dass sich die beiden Angelrutenstücke berühren und in Folge dessen aneinander reiben können.

In Fig. 1 ist zudem am Grundkörper 10 eine Durchgangsbohrung 12 sowie eine Öse 13 zu erkennen. Beides ist jeweils zum Einführen eines Angelhakens und/oder eines Karabiners, auch Snap genannt, und/oder eines Angelköders vorgesehen. Die Durchgangsbohrung 12 ist vorteilhafterweise dafür zu verwenden, dass der vergleichsweise spitze Angelhaken darin eingeführt und aufgrund der Schnurspannung gehalten wird. An der Öse 13 lässt sich bei demontiertem Köder einfach und schnell der Karabiner befestigen.

Für eine kompakte Ausgestaltung ist die Montageklammer idealerweise etwa 4-5 cm lang und hat im geschlossenen Zustand im Bereich des Klemmabschnitts eine maximale Breite von ca. 3 cm und im Bereich des Griffabschnitts von ca. 5 cm.

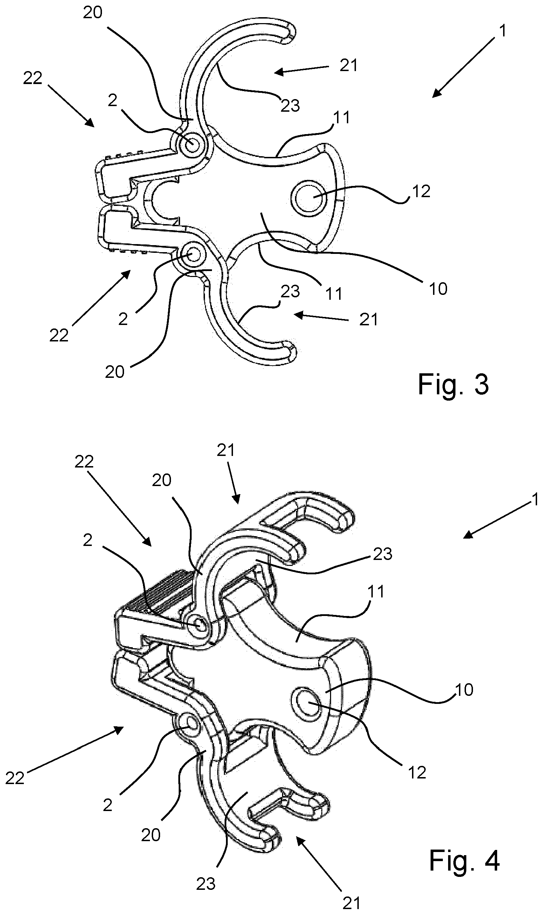

Die Figuren 3 und 4 zeigen die erfindungsgemäße Montageklammer 1 in Seitenansicht bzw. in perspektivischer Ansicht jeweils im geöffneten Zustand. Zur Vermeidung von Wiederholungen wird auf die Beschreibung der Figuren 1 und 2 verwiesen.

In Figur 5 und 6 ist eine zweite Ausführungsform der erfindungsgemäßen Montageklammer 1 in Seitenansicht bzw. perspektivischer Ansicht gezeigt. Der wesentliche Unterschied zur Ausführung gemäß den vorherigen Figuren besteht darin, dass sich die Schenkel 20 noch weiter öffnen und schließen können und damit Angelrutenstücke mit noch größerem und noch kleinerem Durchmesser aufgenommen werden können.

Hierfür sind zum einen die Schenkel 20 in ihren Klemmabschnitten 21 derart unterschiedlich ausgeführt, dass sich ihre Enden im geschlossenen und unbenutzten Zustand der Montageklammer 1 überlappen. Entsprechend ist die Stirnseite 10a des Grundkörpers 10 stufenartig ausgebildet, um das Anliegen an den Seitenflächen 11 des Grundkörpers 10 trotz der unterschiedlichen Klemmabschnitte 21 zu gewährleisten (siehe Fig. 6). Dadurch kann sich im vorliegenden Beispiel der untere Schenkel 20 weiter schließen, wodurch der dortige Freiraum 4 gegenüber der Ausführung gemäß den vorherigen Figuren deutlich kleiner werden kann und somit auch Angelrutenstücke mit kleinem Durchmesser aufgenommen und geklemmt werden können.

Des Weiteren sind an den Schenkeln 20 die Verdickungen 22a an den Enden der Griffabschnitte 22 gegenüber der Ausführung gemäß den vorherigen Figuren schmaler ausgeführt. Die Verdickung 22a ist dabei ausreichend, um die distalen Enden der Federschenkel aufzunehmen. Die Griffabschnitte 22 der Schenkel 20 lassen sich dadurch weiter zusammendrücken, wodurch sich die Klemmabschnitte 21 weiter öffnen und damit die Montageklammer 1 auch Angelrutenstücke mit großem Durchmesser aufnehmen und klemmen kann.

Gegenüber der Ausführung gemäß den vorherigen Figuren ist außerdem der Winkel zwischen Griffabschnitt 22 und Klemmabschnitt 21 verringert worden, wodurch sich der Abstand zwischen den Verdickungen 22a an den Enden der Griffabschnitte 22 vergrößert. Auch diese Maßnahme führt dazu, dass sich die Griffabschnitte 22 der Schenkel 20 über einen weiteren Weg zusammendrücken lassen. Die Klemmabschnitte 21 lassen sich somit weiter öffnen und die Montageklammer 1 kann auch Angelrutenstücke mit großem Durchmesser aufnehmen und klemmen.

Die grundsätzliche Funktionalität der Ausführungsform gemäß Fig 5 und 6 entspricht dabei der der vorherigen Figuren, so dass zur Vermeidung von Wiederholungen auf die Beschreibung der Figuren 1 und 2 verwiesen wird.

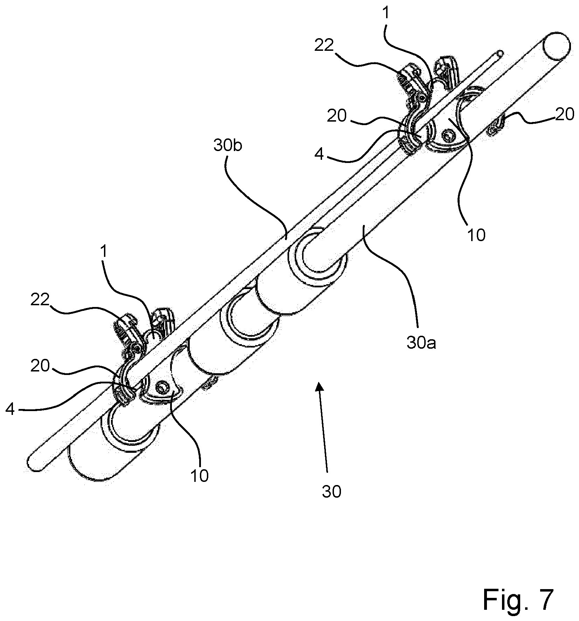

Durch die erfindungsgemäße Montageklammer 1 können insbesondere zu Transportzwecken zwei Angelrutenstücke 30a, 30b einer Steckrute 30 auf einfache, schnelle und komfortable Weise kompakt miteinander verbunden werden. In Figur 7 ist eine Angelrute 30 abgebildet, deren zwei Teilstücke 30a, 30b mit zwei erfindungsgemäßen Montageklammern 1 miteinander verbunden sind. Man hält mit einer Hand die einzelnen Angelrutenstücke 30a, 30b, mit der anderen Hand öffnet man die Montageklammer 1 bzw. deren Schenkel 20 an den Hebelarmen des Griffabschnitts 22 durch Zusammendrücken von Daumen und Zeigefinger, führt die Angelrutenstücke 30a, 30b jeweils in die durch die geöffneten Schenkel 20 zugänglichen Freiräume 4 - siehe auch Fig. 3 und 4 - und schließt dann die Schenkel 20 wieder, so dass die zwei Angelrutenstücke 30a, 30b parallel nebeneinander durch den Grundkörper 10 beabstandet angeordnet sind und durch die Montageklammer 1 fest miteinander verbunden sind. Es bietet sich, wie in Fig. 7 dargestellt, die Verwendung von zwei Montageklammern 1 an, die vorteilhafterweise jeweils in den Endbereichen der Angelrutenstücke 30a, 30b angebracht werden. Wenn noch mehr Angelrutenstücke miteinander verbunden werden sollen, lässt sich das durch weitere Montageklammern 1 auf einfache Weise realisieren.

### Bezugszeichenliste

- 1: Montageklammer
- 2: Gelenk
- 3: Feder
- 4: Freiraum
- 10: Grundkörper
- 10a: Stirnseite des Grundkörpers
- 11: Seitenfläche des Grundkörpers
- 12: Durchgangsbohrung
- 13: Öse
- 20: Schenkel
- 21: Klemmabschnitt
- 22: Griffabschnitt
- 22a: Verdickung
- 23: Schenkelinnenseite
- 30: Angelrute
- 30a: erstes Teilstück der Angelrute
- 30b: zweites Teilstück der Angelrute

## Patentansprüche

1. Montageklammer (1) zum Transport von Angelruten (30), mit einem Grundkörper (10) und zwei Schenkeln (20), die jeweils einen Klemmabschnitt (21) und einen Griffabschnitt (22) aufweisen,
wobei die beiden Schenkel (20) gegenüberliegend über wenigstens ein Gelenk (2) mit dem Grundkörper (10) verbunden sind, derart, dass die Klemmabschnitte (21) der Schenkel (20) zumindest teilweise an Seitenflächen (11) des Grundkörpers (10) anliegen und die Griffabschnitte (22) über den Grundkörper (10) hinausragend jeweils einen Hebelarm bilden,
wobei zwischen den beiden Schenkeln (20) eine Feder (3) angeordnet ist, die die Schenkel (20) so vorspannt, dass die beiden Klemmabschnitte (21) aufeinander zugerichtet gegen den Grundkörper (10) gepresst werden,
und wobei die Schenkel (20) im Klemmabschnitt (21) zumindest teilweise derart konvex nach außen gewölbt sind, dass sich in diesem Bereich jeweils zwischen Innenseiten (23) der Schenkel (20) und den Seitenflächen (11) des Grundkörpers (10) ein Freiraum (4) zur Aufnahme jeweils eines Teilstücks (30a, 30b) einer Angelrute (30) ausbildet und die beiden Freiräume (4) durch den Grundkörper (10) voneinander definiert beabstandet sind.

2. Montageklammer (1) nach Anspruch 1,
wobei das Gelenk (2) zwischen dem Klemmabschnitt (21) und dem Griffabschnitt (22) angeordnet ist.

3. Montageklammer (1) nach Anspruch 1 oder 2,
wobei die beiden Schenkel (20) gegenüberliegend über jeweils ein Gelenk (2) mit dem Grundkörper (10) verbunden sind.

4. Montageklammer (1) nach einem der vorhergehenden Ansprüche,
wobei die Seitenflächen (11) des Grundkörpers (10) konkav gewölbt sind.

5. Montageklammer (1) nach einem der vorhergehenden Ansprüche,
wobei die konvexen Wölbungen der Klemmabschnitte (21) beider Schenkel (20) unterschiedliche Radien aufweisen, so dass sich unterschiedlich große Freiräume (4) ausbilden.

6. Montageklammer (1) nach einem der vorhergehenden Ansprüche,
wobei die Feder (3) als Schenkelfeder ausgebildet ist und die Schenkel der Feder (3) jeweils an der Innenseite des Griffabschnitts (22) der beiden Schenkel (20) der Montageklammer (1) anliegen.

7. Montageklammer (1) nach Anspruch 6,
wobei an den Innenseiten des Griffabschnitts (22) jeweils eine Ausnehmung angeordnet ist, in die die distalen Enden der Schenkelfeder (3) eingeführt sind.

8. Montageklammer (1) nach einem der vorhergehenden Ansprüche,
wobei der Grundkörper (10) eine Durchgangsbohrung (12) aufweist, die zum Einführen eines Angelhakens und/oder eines Karabiners und/oder eines Angelköders geeignet ist.

9. Montageklammer (1) nach einem der vorhergehenden Ansprüche,
wobei an dem Grundkörper (10) eine Öse (13) angeordnet ist, die die zum Einführen eines Angelhakens und/oder eines Karabiners und/oder eines Angelköders geeignet ist.

10. Montageklammer (1) nach einem der vorhergehenden Ansprüche,
wobei die Montageklammer im Spritzguss- oder 3D-Druck-Verfahren hergestellt ist.

11. Montageklammer (1) nach einem der vorhergehenden Ansprüche,
wobei sich die Enden der Schenkel (20) im geschlossenen und unbenutzten Zustand der Montageklammer (1) überlappen.

## Claims

1. Mounting bracket (1) for transporting fishing rods (30), having a base body (10) and two legs (20) which each have a clamping section (21) and a handle section (22),
wherein the two legs (20) are connected opposite one another to the base body (10) via at least one joint (2) in such a way that the clamping sections (21) of the legs (20) rest at least partially against side surfaces (11) of the base body (10) and the handle sections (22) each form a lever arm projecting beyond the base body (10),
wherein a spring (3) is arranged between the two legs (20), which pretensions the legs (20) in such a way that the two clamping sections (21) are pressed towards each other against the base body (10),
and wherein the legs (20) in the clamping section (21) are at least partially convexly curved outwards in such a way that in this region a free space (4) for receiving a respective section (30a, 30b) of a fishing rod (30) is formed between the inner sides (23) of the legs (20) and the side surfaces (11) of the base body (10) and the two free spaces (4) are spaced apart in a defined manner by the base body (10).

2. Mounting bracket (1) according to claim 1,
wherein the joint (2) is arranged between the clamping portion (21) and the handle portion (22).

3. Mounting bracket (1) according to claim 1 or 2,
wherein the two legs (20) are connected opposite each other to the base body (10) via a respective joint (2).

4. Mounting bracket (1) according to one of the preceding claims,
wherein the side surfaces (11) of the base body (10) are concavely curved.

5. Mounting bracket (1) according to one of the preceding claims,
wherein the convex curvatures of the clamping portions (21) of both legs (20) have different radii, so that differently sized free spaces (4) are formed.

6. Mounting bracket (1) according to one of the preceding claims,
wherein the spring (3) is designed as a leg spring and the legs of the spring (3) each rest against the inside of the grip section (22) of the two legs (20) of the mounting bracket (1).

7. Mounting bracket (1) according to claim 6,
wherein a recess, into which the distal ends of the torsion spring (3) are inserted, is arranged on each of the inner sides of the grip section (22).

8. Mounting bracket (1) according to one of the preceding claims,
wherein the base body (10) has a through-hole (12) which is suitable for inserting a fishhook and/or a carabiner and/or a fishing lure.

9. Mounting bracket (1) according to one of the preceding claims,
wherein an eyelet (13) is arranged on the base body (10), which eyelet is suitable for inserting a fishing hook and/or a carabiner and/or a fishing lure.

10. Mounting bracket (1) according to one of the preceding claims,
wherein the mounting bracket is manufactured by injection molding or 3D printing.

11. Mounting bracket (1) according to one of the preceding claims,
wherein the ends of the legs (20) overlap in the closed and unused state of the mounting bracket (1).

## Revendications

1. Pince de montage (1) pour le transport de cannes à pêche (30), comprenant un corps de base (10) et deux branches (20) qui présentent chacune une section de serrage (21) et une section de préhension (22),
les deux branches (20) étant reliées au corps de base (10) en étant opposées l'une à l'autre par l'intermédiaire d'au moins une articulation (2), de telle sorte que les sections de serrage (21) des branches (20) s'appliquent au moins partiellement contre des surfaces latérales (11) du corps de base (10) et que les sections de prise (22) forment chacune un bras de levier en dépassant du corps de base (10),
un ressort (3) étant disposé entre les deux branches (20), lequel précontraint les branches (20) de telle sorte que les deux sections de serrage (21) sont pressées l'une vers l'autre contre le corps de base (10),
et les branches (20) étant au moins partiellement convexes vers l'extérieur dans la section de serrage (21) de telle sorte qu'un espace libre (4) se forme dans cette zone respectivement entre les côtés intérieurs (23) des branches (20) et les surfaces latérales (11) du corps de base (10) pour recevoir respectivement un tronçon (30a, 30b) d'une canne à pêche (30) et les deux espaces libres (4) étant espacés l'un de l'autre de manière définie par le corps de base (10).

2. Pince de montage (1) selon la revendication 1,
l'articulation (2) étant disposée entre la section de serrage (21) et la section de préhension (22).

3. Pince de montage (1) selon la revendication 1 ou 2,
les deux branches (20) étant reliées au corps de base (10) de manière opposée par une articulation (2) respective.

4. Pince de montage (1) selon l'une des revendications précédentes,
dans laquelle les surfaces latérales (11) du corps de base (10) sont bombées de manière concave.

5. Pince de montage (1) selon l'une des revendications précédentes,
les courbures convexes des sections de serrage (21) des deux branches (20) présentant des rayons différents, de sorte que des espaces libres (4) de tailles différentes se forment.

6. Pince de montage (1) selon l'une des revendications précédentes,
le ressort (3) étant conçu comme un ressort à branches et les branches du ressort (3) s'appliquant respectivement contre le côté intérieur de la section de préhension (22) des deux branches (20) de la pince de montage (1).

7. Pince de montage (1) selon la revendication 6,
un évidement étant disposé sur les côtés intérieurs de la section de poignée (22), dans lequel sont introduites les extrémités distales du ressort à branches (3).

8. Pince de montage (1) selon l'une des revendications précédentes,
dans lequel le corps de base (10) présente un trou traversant (12) adapté à l'introduction d'un hameçon et/ou d'un mousqueton et/ou d'un appât de pêche.

9. Pince de montage (1) selon l'une des revendications précédentes,
dans lequel un oeillet (13) est disposé sur le corps de base (10), lequel est approprié pour l'introduction d'un hameçon et/ou d'un mousqueton et/ou d'un appât de pêche.

10. Pince de montage (1) selon l'une des revendications précédentes,
dans laquelle l'agrafe de montage est fabriquée par moulage par injection ou par impression 3D.

11. Pince de montage (1) selon l'une des revendications précédentes,
dans lequel les extrémités des branches (20) se chevauchent lorsque la pince de montage (1) est fermée et non utilisée.
